# EUROPÄISCHE PATENTANMELDUNG

(11) **EP 1 009 149 A2**
(43) Veröffentlichungstag der Anmeldung: **14.06.2000**
(21) Anmeldenummer: 99440348.3
(22) Anmeldetag: 10.12.1999
(51) Int. Cl.: H04M 3/42

(54) **Vermittlungsstelle mit Speicher für teilnehmerdefinierte Dienste**

(30) Priorität: 11.12.1998 DE 19857179
(71) Anmelder: ALCATEL, 75008 Paris (FR)
(72) Erfinder: Stahl, Uwe, 71229 Leonberg (DE); Lautenschlager, Wolfgang, 71287 Weissach-Flacht (DE); Krank, Lothar, 71254 Ditzingen (DE); Weik, Hartmut, 70195 Stuttgart (DE)
(74) Vertreter: Zinsinger, Norbert

(57) **Zusammenfassung**

Ein Telekommunikationsnetz mit einer Vermittlungsstelle (1), bei der in einem Speicher (3) Dienstleistungen gespeichert sind, die der Teilnehmer durch die Vermittlungsstelle ausführen lassen kann, ist dadurch gekennzeichnet, daß die Vermittlungsstelle (1) derart ausgebildet ist, daß sie es dem Teilnehmer gestattet, Programme und/oder Befehle oder Makros zum Speicher (3) der Vermittlungsstelle (1) zu senden, und daß sie es mindestens dem Teilnehmer, der diese Programme/Befehle zur Vermittlungsstelle (1) geschickt hat, ermöglicht, diese Programme/Befehle zu aktivieren und auch wieder zu deaktivieren. Dadurch kann ein Teilnehmer Programme für seine Bedürfnisse entwerfen und oder anpassen.

## Beschreibung

Die Erfindung betrifft ein Telekommunikationsnetz mit einer Vermittlungsstelle, bei der in einem Speicher Dienstleistungen gespeichert sind, die der Teilnehmer durch die Vermittlungsstelle ausführen lassen kann.

Existierende Telekommunikationsnetze bieten den Teilnehmern (Benutzern) eine gewisse Auswahl an Dienstleistungen, die über die Herstellung z.B. einer Telephonverbindung hinausgehen. So wird beispielsweise eine Rufumleitung angeboten, bei der Gespräche für eine bestimmte Teilnehmernummer nicht zu dem Endgerät, das dieser Teilnehmernummer zugeordnet ist, weitergeschaltet werden, sondern bereits in der Vermittlungsstelle auf einen anderen Anschluß umgeleitet werden. Ein Vorteil gegenüber der auch beim Teilnehmer (bei entsprechender Eignung seiner Telekommunikationsanlage) selbst möglichen Umleitung liegt darin, daß bei der Telekommunikationsanlage des Teilnehmers nicht zum Zweck des Umleitens eines bestimmten Gesprächs zwei Kanäle belegt werden müssen. Es sind Anwendungsfälle denkbar, bei denen der Teilnehmer über die vom Anbieter der Telekommunikationsdienste gebotenen Dienstleistungen hinaus selbst eigene Dienstleistungen (Programme) entwerfen will, die der Teilnehmer aber nicht in seiner eigenen Telekommunikationsanlage speichern darf oder will, sondern beim Diensteanbieter.

Daher ist gemäß der Erfindung ein Telekommunikationsnetz der am Anfang beschriebenen Art durch folgende Merkmale gekennzeichnet:

Die Vermittlungsstelle ist derart ausgebildet, daß sie es dem Teilnehmer gestattet, Programme und/oder Befehle oder Makros zum Speicher der Vermittlungsstelle zu senden, vorzugsweise über den Zeichengabekanal (Signalisierungskanal), und daß sie es mindestens dem Teilnehmer, der diese Programme/Befehle zur Vermittlungsstelle geschickt hat, ermöglicht, diese Programme/Befehle zu aktivieren und auch wieder zu deaktivieren.

Ein Vorteil der Erfindung besteht darin, daß sie es ermöglicht, daß ein Teilnehmer Programme und Ablaufsteuerungen für seine Bedürfnisse entwerfen und/oder anpassen kann.

Das Senden der Programme zum Speicher der Vermittlungsstelle über den Zeichengabekanal wird deswegen bevorzugt, weil der genannte Kanal auch für andere Übermittlungen von Daten, die nicht ein Telephongespräch oder z.B. eine Datenübertragung zwischen zwei Teilnehmern des Telekommunikationsnetzes darstellen, vorgesehen ist und sich daher für diesen Zweck eignet. Außerdem ist meistens dessen Bandbreite bzw. Datenübertragungsgeschwindigkeit in Bit/sec kleiner als bei den für z.B. Telephongespräche vorgesehenen Kanälen. Dieses Senden zum Speicher der Vermittlungsstelle kann aber auch über andere Datenwege, z.B. Internet, erfolgen.

Die Programmierung mag sich bei weitgehend vorbereiteten Dienstleistungen/Programmen (wobei diese Vorbereitung vom Betreiber des Telekommunikationsnetzes oder vom obengenannten Teilnehmer oder von einem anderen Teilnehmer getroffen worden sein kann), darauf beschränken, daß der Teilnehmer zwecks Nutzung dieser Dienstleistung nur noch einige Variable eingeben muß. Es kann sich hierbei z.B. um eine Rufumleitung handeln, bei der in Abhängigkeit von der Rufnummer des anrufenden Teilnehmers (gegebenenfalls in Abhängigkeit von einem Teil der Rufnummer, beispielsweise der Ortsvorwahl oder einer Kombination der soeben genannten Abhängigkeiten) eine Umleitung von Anrufen auf bestimmte unterschiedliche Endgeräte erfolgt. So kann z.B. ein Handels- oder Dienstleistungsunternehmen mit Zweigstellen in mehreren Städten einen Anruf zu derjenigen Zweigstelle umleiten lassen, die dem Anrufer räumlich am nächsten gelegen ist.

Zur Erfindung gehört auch eine Vermittlungsstelle mit den erfindungsgemäßen Merkmalen.

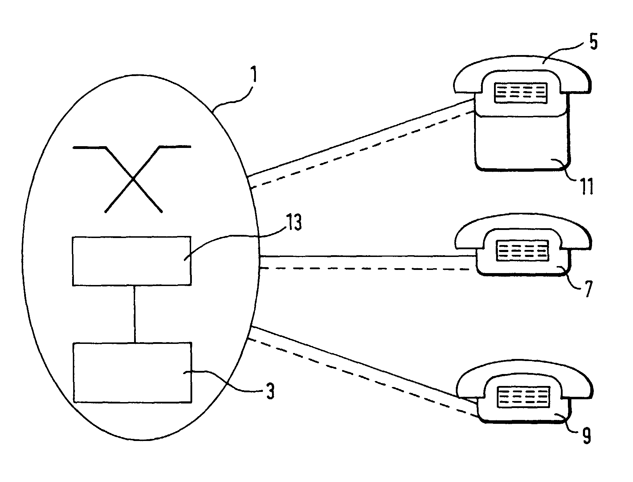

Weitere Merkmale und Vorteile der Erfindung ergeben sich aus der nachfolgenden Beschreibung eines Ausführungsbeispiels der Erfindung anhand der Zeichnung, die erfindungswesentliche Einzelheiten zeigt, und aus den Patentansprüchen. Die einzelnen Merkmale können je einzeln für sich oder zu mehreren in beliebiger Kombination bei einer Ausführungsform der Erfindung verwirklicht sein.

Die einzige Figur zeigt eine schematische Darstellung eines Telekommunikationsnetzes, bei dem mit einer Vermittlungsstelle drei Teilnehmer verbunden sind, die bei dem dargestellten Zustand in unterschiedlicher Weise das Telekommunikationsnetz mit seiner erfindungsgemäßen Ausgestaltung benutzen.

Es ist eine Vermittlungsstelle 1 vorhanden, zu der eine Speichereinheit 3 gehört, in der Programme/Dienstleistungen speicherbar sind. Telekommunikationseinrichtungen 5, 7 und 9 von drei Teilnehmern sind als Telephonapparate graphisch dargestellt. Dabei ist bei Telekommunikationseinrichtung 5 ein mit dieser gekoppelter Computer 11 vorhanden. Dieser ist derart ausgebildet, daß der Teilnehmer eine eigene Anwendung programmieren und zur Vermittlungsstelle über den Signalisierungskanal senden kann. Der Signalisierungskanal ist im Beispiel der D-Kanal eines ISDN-Netzes, dessen Telephongespräche und Datenübertragungen zwischen den Teilnehmern und der Vermittlungsstelle über die B-Kanäle des ISDN-Netzes laufen. In der Zeichnung sind die B-Kanäle durch durchgezogene Linien, die D-Kanäle durch unterbrochene Linien dargestellt. Innerhalb des ISDN-Netzes, insbesondere zwischen Vermittlungsstellen, werden Telephongespräche, Daten und Signale zur Zeit bekanntlich nach dem Protokoll #7 übertragen.

Im Beispiel hat der Teilnehmer an der Telekommunikationseinrichtung 5 ein Programm über den Zeichengabekanal zur Vermittlungsstelle 1 gesendet. Eine Steuereinrichtung 13 in der Vermittlungsstelle 1 hat erkannt, daß es sich um ein zu speicherndes Programm handelt und hat nach Prüfung einer Zugangsberechtigung des Teilnehmers das Programm in der Speichereinheit 3 gespeichert. Das Programm stellt eine Rufumleitung bereit. Die Steuerung 13 sorgt auch dafür, daß die Rufumleitung nach Aktivierung (siehe unten) ausgeführt wird.

Der Teilnehmer an der Telekommunikationseinrichtung 7 aktiviert dieses in der Vermittlungsstelle gespeicherte Programm für seine Zwecke, indem er in diesem Beispiel die in der Beschreibungseinleitung beschriebene spezielle Rufumleitung in Abhängigkeit von der Rufnummer des anrufenden Teilnehmers aktiviert und dabei die Vorwahlen eingibt, für die unterschiedliche Umleitungen auf ebenfalls vom Teilnehmer an der Telekommunikationseinrichtung 7 einzugebende Telephonnummern erfolgen sollen. Diese Aktivierung des Programms wirkt sich auf einen Anruf des Teilnehmers an der Telekommunikationseinrichtung 9 aus. Dessen Anruf bei der Telekommunikationseinrichtung 7 wird daher von der Vermittlungsstelle 1 nicht an die Telekommunikationseinrichtung 7 durchgeschaltet, sondern an ein Telephon, dessen Rufnummer vom Teilnehmer an der Telekommunikationseinrichtung 7 spezifiziert worden war. Dieses zuletzt genannte Telephon ist zur Vereinfachung nicht dargestellt.

Bei Bedarf schaltet der Teilnehmer an der Telekommunikationseinrichtung 7 durch einen an die Vermittlungsstelle 1 über den Zeichengabekanal gesendeten Befehl die Rufumleitung wieder ab.

Auch der Teilnehmer an der Telekommunikationseinrichtung 5 kann sein sein gespeichertes Programm für sich aktivieren und deaktivieren (abschalten).

Die Steuereinrichtung 13 und die Speichereinrichtung 3 sind bei Ausführungsformen der Erfindung durch einen Computer mit großem Festplattenspeicher für die Programme und mit großem Arbeitsspeicher für die jeweils aktivierten Programme realisiert.

Die Erfindung ist nicht darauf beschränkt, daß bei einem Netz mit einer Vielzahl von Vermittlungsstellen der Teilnehmer an der Telekommunikationseinrichtung 5 die von ihm entworfenen Programme nur in der Vermittlungsstelle speichern kann, an die er unmittelbar angeschlossen ist.

## Patentansprüche

1. Telekommunikationsnetz mit einer Vermittlungsstelle (1), bei der in einem Speicher (3) Dienstleistungen gespeichert sind, die der Teilnehmer durch die Vermittlungsstelle ausführen lassen kann,
dadurch gekennzeichnet, daß die Vermittlungsstelle (1) derart ausgebildet ist, daß sie es dem Teilnehmer gestattet, Programme und/oder Befehle oder Makros zum Speicher (3) der Vermittlungsstelle (1) zu senden, und daß sie es mindestens dem Teilnehmer, der diese Programme/Befehle zur Vermittlungsstelle (1) geschickt hat, ermöglicht, diese Programme/Befehle zu aktivieren und auch wieder zu deaktivieren.

2. Telekommunikationsnetz nach Anspruch 1, dadurch gekennzeichnet, daß die Übersendung der Programme und/oder Befehle oder Makros zum Speicher (3) der Vermittlungsstelle (1) über den Zeichengabekanal (Signalisierungskanal) erfolgt.

3. Telekommunikationsnetz nach Anspruch 1, dadurch gekennzeichnet, daß die Übersendung der Programme und/oder Befehle oder Makros zum Speicher (3) der Vermittlungsstelle (1) über Internet erfolgt.

4. Vermittlungsstelle, gekennzeichnet durch die die Vermittlungsstelle betreffenden Merkmale eines der vorhergehenden Ansprüche.
